(19) Europäisches Patentamt
European Patent Office
Office européen des brevets

(11) **EP 3 001 109 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(51) Int Cl.:
*F24C 7/08* (2006.01)      *G06F 3/01* (2006.01)

(21) Anmeldenummer: **15184870.2**

(22) Anmeldetag: **11.09.2015**

(54) **HAUSHALTSGERÄTEVORRICHTUNG MIT GESTENDETEKTION**

DOMESTIC APPLIANCE WITH GESTURE DETECTION

DISPOSITIF D'APPAREIL MENAGER AVEC DETECTION DE GESTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2014 ES 201431394**

(43) Veröffentlichungstag der Anmeldung:
**30.03.2016 Patentblatt 2016/13**

(73) Patentinhaber: **BSH Hausgeräte GmbH**
**81739 München (DE)**

(72) Erfinder:
• **Llorente Gil, Sergio**
**50009 Zaragoza (ES)**
• **Palacios Gasós, Jose Manuel**
**50018 Zaragoza (ES)**
• **Sagües Blázquiz, Carlos**
**50018 Zaragoza (ES)**

(56) Entgegenhaltungen:
EP-A1- 0 446 642        EP-A2- 2 636 954
WO-A1-2012/150216       WO-A2-02/054169
WO-A2-2010/135478       DE-A1- 10 361 341
DE-A1-102010 039 371    DE-A1-102013 205 823
US-A1- 2014 125 813

**Beschreibung**

Die Erfindung betrifft eine Haushaltsgerätevorrichtung nach dem Patentanspruch 1.

Aus der europäischen Druckschrift EP 1 505 350 A2 ist bereits eine Haushaltsgerätevorrichtung bekannt mit einer Sensoreinheit, die unterhalb einer Bedienfläche angeordnet ist und in einem Betriebszustand eine Betätigung von Bedienmitteln detektiert. Diese Sensoreinheit detektiert hierbei das Auflegen eines Fingers oder eine Ausübung von Druck auf die Bedienmittel. Die Haushaltsgerätevorrichtung umfasst eine weitere Sensoreinheit, die oberhalb der Kochfeldplatte in einer Dunstabzugshaube angeordnet und als Kamera ausgebildet ist. Diese weitere Sensoreinheit dient ausschließlich zur Überwachung des Kochbereichs und damit zur Erkennung von aufgestelltem Gargeschirr.

Weiterer Stand der Technik ist aus EP 2 636 954 A2 und DE 10 2010 039371 A1 bekannt.

Die Aufgabe der Erfindung besteht insbesondere darin, eine gattungsgemäße Vorrichtung mit verbesserten Eigenschaften hinsichtlich eines hohen Komforts für einen Bediener bereitzustellen. Die Aufgabe wird erfindungsgemäß durch die Merkmale der Patentansprüche 1 und 11 gelöst, während vorteilhafte Ausgestaltungen und Weiterbildungen der Erfindung den Unteransprüchen entnommen werden können.

Es wird eine Kochfeldvorrichtung, vorgeschlagen mit einer Sensoreinheit, die dazu vorgesehen ist, wenigstens eine insbesondere dreidimensionale Bediengeste eines Bedieners zu detektieren, und mit einer Steuereinheit, die dazu vorgesehen ist, auf Basis der durch die Sensoreinheit detektierten wenigstens einen Bediengeste wenigstens eine Aktion auszuführen und/oder einzuleiten.

Unter einer "Sensoreinheit" soll insbesondere eine Einheit verstanden werden, die zu einer Detektion der wenigstens einen Bediengeste zumindest einen Sensor aufweist und die insbesondere die von dem zumindest einen Sensor detektierte wenigstens eine Bediengeste in elektrische Signale umwandelt und vorteilhaft an die Steuereinheit ausgibt. Der zumindest eine Sensor könnte verschiedene, einem Fachmann als sinnvoll erscheinende Ausgestaltungen annehmen. Gemäß der Erfindung ist die zumindest eine Sensor dazu vorgesehen, die wenigstens eine Bediengeste mittels Infrarot-Strahlung zu detektieren. Unter einer "Bediengeste" soll insbesondere eine Bewegung eines Körperteils, insbesondere eines Arms, vorteilhaft einer Hand und/oder besonders vorteilhaft eines Fingers des Bedieners verstanden werden, die der Bediener zu einer Eingabe von Betriebsparametern bewusst, insbesondere zielgerichtet, und vorteilhaft mit einem zumindest weitgehend vordefinierten Bewegungsablauf ausführt, um insbesondere eine korrekte Detektion durch die Sensoreinheit und/oder eine Auswertung durch die Steuereinheit zu gewährleisten. Unter einer "Steuereinheit" soll insbesondere eine elektronische Einheit verstanden werden, die vorzugsweise in einer Steuer- und/oder Regeleinheit eines Haushaltsgeräts zumindest teilweise integriert ist und die vorteilhaft dazu vorgesehen ist, zumindest die elektrischen Komponenten des Haushaltsgeräts zu steuern und/oder zu regeln, und die vorzugsweise dazu vorgesehen ist, auf Basis der durch die Sensoreinheit detektierten wenigstens einen Bediengeste wenigstens eine Aktion auszuführen und/oder einzuleiten. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Die Steuereinheit wertet insbesondere die von der Sensoreinheit detektierte wenigstens eine Bediengeste aus, wobei die Steuereinheit insbesondere die detektierte wenigstens eine Bediengeste mit in der Speichereinheit der Steuereinheit hinterlegten Gesten vergleicht und vorteilhaft einer Aktion zuordnet, welche die Steuereinheit anschließend insbesondere ausführt und/oder einleitet. Unter der Wendung, dass die Steuereinheit eine Aktion "einleitet", soll insbesondere verstanden werden, dass die Steuereinheit wenigstens ein Signal, wie insbesondere einen Befehl und/oder eine Ausführungsanordnung, an eine weitere Einheit, insbesondere auch über ein Bussystem, ausgibt, welche die Aktion anschließend ausführt. Es sind verschiedene durch die Steuereinheit ausgegebene Signale denkbar. Beispielsweise könnte die Steuereinheit das wenigstens eine Signal an eine Ausgabeeinheit ausgeben, um insbesondere eine Ausgabe an einen Bediener zu erreichen. Alternativ oder zusätzlich könnte die Steuereinheit das wenigstens eine Signal an eine Versorgungseinheit insbesondere der Haushaltsgerätevorrichtung und/oder des Haushaltsgeräts, ausgeben, um eine Aktivierung eines elektrischen Elements zu erreichen, wie beispielsweise eines Heizelements und/oder eines Motors und/oder eines Kompressors. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort, insbesondere ein hoher Bedienkomfort, für einen Bediener erreicht werden. Vorteilhaft kann ein die Haushaltsgerätevorrichtung aufweisendes Haushaltsgerät in einfacher Weise, insbesondere durch einfache Bediengesten und/oder Handbewegungen, bedient werden. Insbesondere kann eine präzise Steuerung des Haushaltsgeräts und/oder eine hohe Zuverlässigkeit erreicht werden. Ferner kann ein Platzbedarf reduziert werden, da auf Bedieneinheiten verzichtet werden kann. Insbesondere bei Kochfeldern, insbesondere Matrixkochfeldern, kann somit eine Vergrößerung eines Kochbereichs ermöglicht werden.

Gemäß der Erfindung ist die Sensoreinheit auf einer einem Bediener abgewandten Seite einer Haushaltsgeräteplatte angeordnet, wobei die Sensoreinheit insbesondere innerhalb eines von einem Außengehäuse umschlossenen Hohlraums angeordnet ist. Dadurch kann die Sensoreinheit insbesondere innerhalb eines fertigen Endprodukts, insbesondere des Haushaltsgeräts, angeordnet und/oder ausgeliefert werden, wobei vorteilhaft auf eine separate, von dem Haushaltsgerät getrennt zu erhaltende Sensoreinheit verzichtet werden kann. Vorteilhaft kann die Sensoreinheit geschützt angeordnet werden, wodurch insbesondere eine Beschädigung und/oder Verschmutzung vorteilhaft reduziert und eine Zuverlässigkeit gesteigert werden kann.

Gemäß der Erfindung ist die Sensoreinheit zumindest einen optischen Sensor, insbesondere eine Kamera, aufweist, der insbesondere dazu vorgesehen ist, die wenigstens eine Bediengeste mittels elektromagnetischer Wellen zu detektieren. Dadurch können insbesondere weit verbreitete und/oder kommerziell erwerbliche Sensoren verwendet werden, wodurch vorzugsweise eine preisgünstige und/oder zuverlässige Ausgestaltung erreicht werden kann.

Weiterhin wird vorgeschlagen, dass der zumindest eine optische Sensor einen Bildwinkel von mindestens 80°, insbesondere von mindestens 90°, vorteilhaft von mindestens 100° und vorzugsweise von mindestens 120° aufweist. Der zumindest eine optische Sensor weist insbesondere einen Bildwinkel von maximal 170°, vorteilhaft von maximal 165° und vorzugsweise von maximal 160° auf. Unter einem "Bildwinkel" soll insbesondere der maximale Winkel zwischen zwei beliebigen Geraden, verstanden werden, die insbesondere in einem Kegelmantel eines Kegels mit beliebiger Grundfläche verlaufen, wobei der Kegel vorteilhaft einen Bereich, insbesondere einen Detektionsbereich, aufspannt, innerhalb dessen eine Detektion durch den zumindest einen optischen Sensor möglich ist. Die Grundfläche des Kegels könnte hierbei beispielsweise eine wenigstens im Wesentlichen rechteckige Gestalt aufweisen. Vorteilhaft weist die Grundfläche des Kegels jedoch eine wenigstens im Wesentlichen ovale Grundfläche auf, die beispielsweise eine wenigstens im Wesentlichen ellipsenförmige Gestalt aufweisen könnte, jedoch vorzugsweise eine wenigstens im Wesentlichen kreisförmige Gestalt aufweist. Dadurch kann insbesondere eine weiträumige Detektion der wenigstens einen Bediengeste und/oder ein hoher Komfort detektiert werden.

Gemäß der Erfindung, und für den Fall einer für sichtbares Licht zumindest weitgehend undurchlässigen Haushaltsgeräteplatte, wie bei bei einer intransparenten Kochfeldplatte, ist der zumindest eine optische Sensor vorzugsweise dazu vorgesehen, Infrarot-Strahlung aus einem Wellenlängenbereich von 850 nm bis 1000 nm zu detektieren. Dadurch kann insbesondere eine präzise Detektion der wenigstens einen Bediengeste erreicht werden.

Zudem wird vorgeschlagen, dass die Haushaltsgerätevorrichtung zumindest eine Lichtquelle umfasst, die dazu vorgesehen ist, einen Detektionsbereich des zumindest einen optischen Sensors auszuleuchten, um eine präzise Detektion der wenigstens einen Bediengeste zu ermöglichen. Unter einer "Lichtquelle" soll insbesondere ein Element verstanden werden, das dazu vorgesehen ist, elektromagnetische Strahlung zu emittieren, und zwar insbesondere zumindest in Richtung des Detektionsbereichs des zumindest einen optischen Sensors und vorteilhaft in einem Wellenlängenbereich, welcher auf einen von dem zumindest einen optischen Sensor detektierbaren Wellenlängenbereich abgestimmt ist. Der auf den von dem zumindest einen optischen Sensor detektierbaren Wellenlängenbereich abgestimmte Wellenlängenbereich ist insbesondere gewählt, um eine Beeinflussung der durch von dem zumindest einen optischen Sensor vorgenommenen Detektion durch die von zumindest einer Beleuchtungseinheit emittierte elektromagnetische Strahlung zu vermeiden. Die zumindest eine Lichtquelle ist insbesondere dazu vorgesehen, Infrarot-Strahlung in einem Wellenlängenbereich zu emittieren, der wenigstens im Wesentlichen dem von dem zumindest einen optischen Sensor detektierbaren Wellenlängenbereich entspricht. Unter einem "Detektionsbereich" soll insbesondere ein Bereich verstanden werden, innerhalb dessen eine Detektion durch den zumindest einen optischen Sensor möglich ist. In einer alternativen Ausgestaltung könnte die Sensoreinheit die zumindest eine Lichtquelle aufweisen, welche in diesem Fall insbesondere benachbart zu dem zumindest einen optischen Sensor angeordnet und dazu vorgesehen ist, elektromagnetische Strahlung in einer Richtung zu emittieren, welche die Bildwinkel des zumindest einen optischen Sensors wenigstens im Wesentlichen halbiert. Dadurch kann insbesondere eine geringe Fehleranfälligkeit bei der Detektion der wenigstens einen Bediengeste erreicht werden. Vorteilhaft kann eine homogene und/oder bekannte, insbesondere hinsichtlich einer Wellenlänge und/oder Beleuchtungsstärke, und/oder konstante Ausleuchtung des Detektionsbereichs erreicht werden, wobei vorteilhaft eine Bildung von Schatten vermieden werden kann, die beispielsweise durch den Bediener und/oder sich im Detektionsbereich befindliche Gegenstände erzeugt sein könnten.

Gemäß der Erfindung umfasst die Sensoreinheit zumindest zwei Sensoren aufweist, die gemeinsam dazu vorgesehen sind, die wenigstens eine Bediengeste stereoskopisch zu detektieren. Es sind verschiedene Ausgestaltungen der zumindest zwei Sensoren denkbar. Gemäß der Erfindung sind die zumindest zwei Sensoren jedoch wenigstens im Wesentlichen gleichartig ausgebildet. Hierbei könnten beispielsweise die zumindest zwei Sensoren beide zu einer Detektion von Druckschwankungen und/oder Dichteschwankungen vorgesehen sein. Bevorzugt sind die zumindest zwei Sensoren jedoch beide zu einer Detektion von elektromagnetischer Strahlung vorgesehen, wobei gemäß der Erfindung die zumindest zwei Sensoren als optische Sensoren ausgebildet sind. Hierbei könnten die zumindest zwei Sensoren beispielsweise zu einer Detektion von elektromagnetischer Strahlung aus unterschiedlichen Wellenlängenbereichen vorgesehen sein. Vorzugsweise weisen die zumindest zwei Sensoren jedoch wenigstens im Wesentlichen dieselben Eigenschaften auf, wie der zumindest eine optische Sensor der Sensoreinheit. Unter der Wendung, dass die zumindest zwei Sensoren gemeinsam dazu vorgesehen sind, die wenigstens eine Bediengeste "stereoskopisch" zu detektieren, soll insbesondere verstanden werden, dass die zumindest zwei Sensoren zueinander beabstandet angeordnet sind, wobei vorteilhaft ein Abstand zwischen den zumindest zwei Sensoren insbesondere mindestens 10 cm, vorteilhaft mindestens 20 cm, besonders vorteilhaft mindestens 30 cm, vorzugsweise mindestens 40 cm und besonders bevorzugt mindestens 50 cm beträgt, und wobei ein Detektionsbereich eines ersten Sensors der zumindest zwei Sensoren und ein Detektionsbereich eines zweiten Sensors der zumindest zwei Sensoren überlappend angeordnet sind. Die zumindest zwei Sensoren sind insbesondere zu einer Ermöglichung der stereoskopischen Detektion der wenigstens einen Bediengeste vorteilhaft zueinander beabstandet angeordnet. Hierbei weisen die zumindest zwei Sensoren insbesondere einen Abstand von mindestens 10 cm, vorteilhaft von mindestens 25 cm, besonders vorteilhaft von mindestens 40 cm und vorzugsweise von mindestens 50 cm auf. Dadurch kann insbesondere ein hoher Komfort für einen Bediener erreicht werden. Besonders vorteilhaft kann durch die Detektion der wenigstens einen Bediengeste durch die zumindest zwei Sensoren eine Wiedergabe von Bildern der wenigstens einen Bediengeste mit einem räumlichen Eindruck von Tiefe ermöglicht werden.

Ferner wird vorgeschlagen, dass die Sensoreinheit dazu vorgesehen ist, die wenigstens eine Bediengeste mittels Streifenprojektion zu detektieren. Unter einer "Streifenprojektion" soll insbesondere ein optisches Messverfahren verstanden werden, bei welchem zu einer dreidimensionalen Erfassung wenigstens einer Oberfläche zumindest eine Bildsequenz Verwendung findet. Die Sensoreinheit weist vorteilhaft zumindest eine Strahlungsquelle, insbesondere zumindest einen Projektor, auf, die insbesondere zeitlich sequentiell und insbesondere mit einer bestimmten Frequenz in Richtung des Detektionsbereichs Projektionsmuster, insbesondere von unterschiedlicher Gestalt, wie beispielsweise von unterschiedlicher Helligkeit und/oder unterschiedlicher Breite, emittiert. Beispielsweise könnte das Projektionsmuster von Gittern und/oder von parallelen Streifen gebildet sein, wobei vorteilhaft ein Streifen hoher Helligkeit von zwei Streifen geringer Helligkeit sowie ein Streifen geringer Helligkeit von zwei Streifen hoher Helligkeit benachbart zueinander angeordnet sind. Vorteilhaft weist die Sensoreinheit zusätzlich zu der zumindest einen Strahlungsquelle zumindest einen optischen Sensor auf, wie insbesondere den zumindest einen optischen Sensor, der das von der zumindest einen Strahlungsquelle emittierte Projektionsmuster im Anschluss an eine Reflektion insbesondere von einer Hand und/oder eines Finger des Bedieners detektiert. Auf Basis der von dem zumindest einen optischen Sensor detektierten Projektionsmuster ist eine Detektion der wenigstens einen Bediengeste durch Erstellung einer zeitlichen Abfolge von Bildern ermöglicht. Dadurch kann insbesondere eine hohe Detektionszuverlässigkeit erreicht werden.

In einer weiteren Ausgestaltung wird vorgeschlagen, dass die Sensoreinheit zusätzlich insbesondere zu einer Detektion der wenigstens einen Bediengeste zu einer Gargeschirrerkennung vorgesehen ist, wodurch insbesondere eine Vielzahl an Eigenschaften von wenigstens einem aufgestellten Gargeschirr detektiert werden kann, wie beispielsweise eine Art und/oder eine Position und/oder ein Material und/oder eine Form und/oder Gestalt und/oder ein Inhalt des wenigstens einen aufgestellten Gargeschirrs.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 ein Haushaltsgerät mit einer Haushaltsgerätevorrichtung in einer schematischen Draufsicht,
Fig. 2 einen Schnitt entlang der Linie II-II in Fig. 1 und
Fig. 3 eine alternative Haushaltsgerätevorrichtung in einer schematischen Schnittdarstellung.

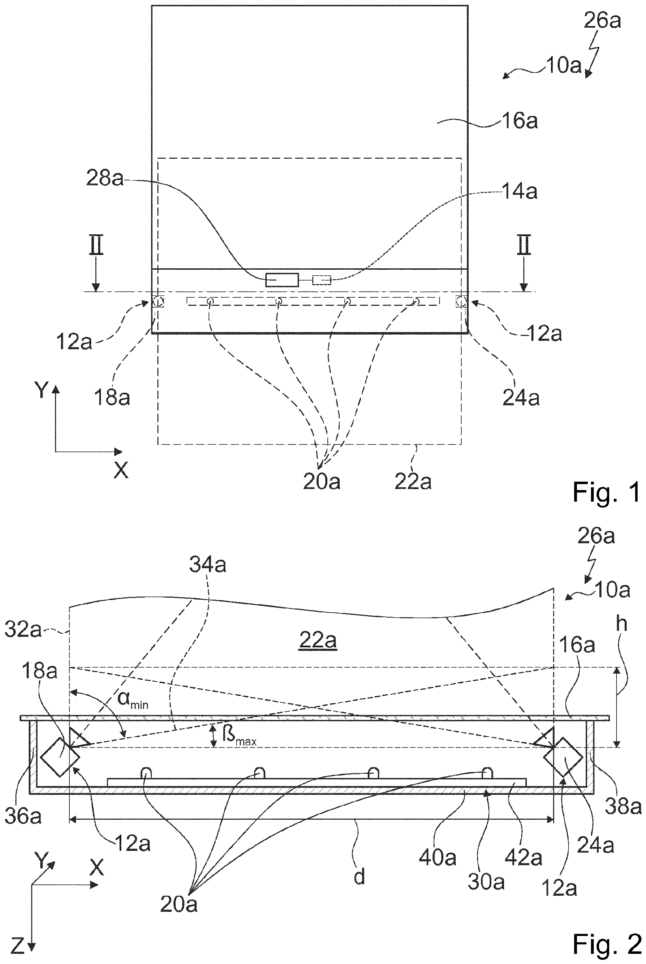

Fig. 1 zeigt ein Haushaltsgerät 26a, das als Kochfeld ausgebildet ist, mit einer Haushaltsgerätevorrichtung 10a, die als Kochfeldvorrichtung ausgebildet ist. Die Haushaltsgerätevorrichtung 10a umfasst eine Haushaltsgeräteplatte 16a. In einem montierten Zustand bildet die Haushaltsgeräteplatte 16a einen Teil eines Außengehäuses aus, und zwar insbesondere eines Außengehäuses des Haushaltsgeräts 26a. Die Haushaltsgerätevorrichtung 10a umfasst ein Gehäusebauteil 30a, welches in dem montierten Zustand gemeinsam mit der Haushaltsgeräteplatte 16a das Außengehäuse bildet (vgl. Fig. 2). Das Gehäusebauteil 30a und die Haushaltsgeräteplatte 16a sind in dem montierten Zustand aneinander befestigt. Die Haushaltsgerätevorrichtung weist alternativ mehrere Gehäusebauteile auf, welche gemeinsam mit der Haushaltsgeräteplatte das Außengehäuse bilden könnten. Die Haushaltsgeräteplatte könnte beispielsweise als Frontplatte und/oder Deckplatte des Außengehäuses insbesondere des Haushaltsgeräts ausgebildet sein. Im vorliegenden Ausführungsbeispiel ist die Haushaltsgeräteplatte 16a als Kochfeldplatte ausgebildet.

In dem montierten Zustand ist die Haushaltsgeräteplatte 16a zu einem Aufstellen von Gargeschirr vorgesehen. Die Haushaltsgerätevorrichtung 10a umfasst mehrere Heizelemente (nicht dargestellt), die jeweils dazu vorgesehen sind, auf der Haushaltsgeräteplatte 16a oberhalb der Heizelemente aufgestelltes Gargeschirr zu erhitzen. Die Heizelemente könnten verschiedene Ausgestaltungen annehmen. Beispielsweise könnten die Heizelemente als Gasbrenner und/oder als Widerstandsheizkörper und/oder als Strahlungsheizkörper und/oder als Induktoren ausgebildet sein.

Die Haushaltsgerätevorrichtung 10a umfasst eine Bedieneinheit 28a zu einer Eingabe und/oder Auswahl von Betriebsparametern (vgl. Fig. 1), beispielsweise einer Heizleistung und/oder einer Heizleistungsdichte und/oder einer Heizzone. Die Bedieneinheit 28a ist zu einer Ausgabe eines Werts eines Betriebsparameters an einen Bediener vorgesehen. Hierbei könnte die Bedieneinheit den Wert des Betriebsparameters an einen Bediener optisch und/oder akustisch ausgeben. Die Eingabe mittels der Bedieneinheit kann mit verschiedenen aus dem Stand der Technik bekannten Bedienmitteln erfolgen. Beispielsweise könnte die Eingabe mittels der Bedieneinheit durch berührungsempfindliche Bedienmittel erfolgen, wie beispielsweise Touch-Screens und/oder Touch-Pads und/oder Schieberegler. Alternativ oder zusätzlich könnte die Eingabe mittels der Bedieneinheit durch mechanische Bedienmittel erfolgen, wie beispielsweise Drehknebel und/oder Discs und/oder Knöpfe und/oder Schalter.

Die Haushaltsgerätevorrichtung 10a umfasst eine Sensoreinheit 12a, die in einem Betriebszustand Bediengesten eines Bedieners detektiert. Im Folgenden wird eine Detektion von genau einer Bediengeste durch die Sensoreinheit 12a beschrieben. Mittels der durch die Sensoreinheit 12a detektierten Bediengeste kann ein Bediener eine Eingabe von Betriebsparametern vornehmen. Somit kann in einer alternativen Ausgestaltung auf die Bedieneinheit verzichtet werden. Die Haushaltsgerätevorrichtung 10a umfasst eine Steuereinheit 14a, an welche die Sensoreinheit 12a die detektierte Bediengeste ausgibt. Die Steuereinheit 14a führt auf Basis der durch die Sensoreinheit 12a detektierten Bediengeste Aktionen aus. Zudem leitet die Steuereinheit 14a auf Basis der durch die Sensoreinheit 12a detektierten Bediengeste Aktionen ein. Im Folgenden wird eine Ausführung und/oder Einleitung von genau einer Aktion auf Basis der durch die Sensoreinheit 12a detektierten Bediengeste durch die Steuereinheit 14a beschrieben.

Die Sensoreinheit 12a ist in dem montierten Zustand auf einer einem Bediener abgewandten Seite der Haushaltsgeräteplatte 16a angeordnet. In dem montierten Zustand ist die Sensoreinheit 12a in dem Außengehäuse angeordnet.

Die y-Richtung ist im Wesentlichen senkrecht zu einer x-Richtung ausgerichtet. Die Haushaltsgeräteplatte 16a weist eine Haupterstreckungsebene auf, welche in der Einbaulage im Wesentlichen horizontal ausgerichtet ist. Die x-Richtung und die y-Richtung sind in einer durch die Haupterstreckungsebene aufgespannten Ebene angeordnet. Die Haupterstreckungsebene der Haushaltsgeräteplatte 16a ist parallel zu einer größten Seitenfläche eines kleinsten geometrischen Quaders, welcher die Haushaltsgeräteplatte 16a gerade noch vollständig umschließt. Die Haupterstreckungsebene der Haushaltsgeräteplatte 16a verläuft durch den Mittelpunkt des Quaders. In der Einbaulage ist die Haupterstreckungsebene der Haushaltsgeräteplatte 16a im Wesentlichen senkrecht zu einer Schwerkraftrichtung ausgerichtet. Somit sind die x-Richtung und die y-Richtung in der Einbaulage im Wesentlichen senkrecht zu einer Schwerkraftrichtung ausgerichtet.

Gemäß der Erfindung weist die Sensoreinheit 12a zwei Sensoren 18a, 24a auf, die gemeinsam die Bediengeste stereoskopisch detektieren (vgl. Fig. 2). Die Sensoreinheit 12a weist einen optischen Sensor 18a auf. Der Sensor 18a ist als optischer Sensor ausgebildet. Zudem weist die Sensoreinheit 12a einen weiteren Sensor 24a auf. Der weitere Sensor 24a ist als optischer Sensor ausgebildet. Hierbei sind der optische Sensor 18a und der weitere Sensor 24a im Wesentlichen identisch ausgestaltet.

Der optische Sensor 18a und der weitere Sensor 24a sind zueinander beabstandet angeordnet. Die Sensoren 18a, 24a sind an einander bezüglich der x-Richtung gegenüberliegenden Seitenwänden 36a, 38a des Gehäusebauteils 30a angeordnet. Der optische Sensor 18a ist in einem Nahbereich einer ersten Seitenwand 36a des Gehäusebauteils 30a angeordnet. Der weitere Sensor 24a ist in einem Nahbereich einer zweiten Seitenwand 38a des Gehäusebauteils 30a angeordnet. Das Gehäusebauteil 30a weist einen Gehäuseboden 40a auf, der in dem montierten Zustand im Wesentlichen parallel zu der Haupterstreckungsebene der Haushaltsgeräteplatte 16a des Hauptbauteils ausgerichtet ist. Der Gehäuseboden 40a verbindet die Seitenwände 36a, 38a miteinander. In dem montierten Zustand weisen die Sensoren 18a, 24a einen Abstand d auf, der geringfügig kleiner ist als eine Erstreckung des Gehäusebauteils 30a in der x-Richtung.

Die Sensoren 18a, 24a sind in dem montierten Zustand maximal zueinander beabstandet angeordnet. Hierdurch sind insbesondere Sensoren 18a, 24a mit einem kleinen Bildwinkel $\alpha$ verwendbar. Der Bildwinkel $\alpha$ ist in dem montierten Zustand abhängig von dem Abstand d zwischen den Sensoren 18a, 24a. Zudem ist der Bildwinkel $\alpha$ in der Einbaulage abhängig von einer zu der Schwerkraftrichtung im Wesentlichen parallelen Höhe h, ab welcher eine Detektion der Bediengeste möglich ist. Im Folgenden wird lediglich der optische Sensor 18a beschrieben, da der weitere Sensor 24a im Wesentlichen identisch ausgestaltet ist.

Der Bildwinkel $\alpha$ ist bei Betrachtung in einer Schnittebene, die senkrecht zu der Haupterstreckungsebene der Haushaltsgeräteplatte 16a ausgerichtet ist, durch eine erste gedachte Gerade 32a und eine zweite gedachte Gerade 34a aufgespannt. Die erste gedachte Gerade 32a und die zweite gedachte Gerade 34a gehen von dem optischen Sensor 18a aus und sind in durch den Bildwinkel $\alpha$ definierte Richtungen schräg zueinan-

der ausgerichtet. In der gewählten Position des optischen Sensors 18a ist die erste gedachte Gerade 32a im Wesentlichen parallel zu der Schwerkraftrichtung ausgerichtet. Die zweite gedachte Gerade 34a ist in der gewählten Position des optischen Sensors 18a in dem montierten Zustand schräg relativ zu dem Gehäuseboden 40a ausgerichtet. In dem montierten Zustand schließen die zweite gedachte Gerade 34a und der Gehäuseboden 40a einen Winkel β miteinander ein. In Abhängigkeit des Abstands d und der Höhe h ist ein minimaler Wert des Bildwinkels α mittels geometrischer Überlegungen errechenbar.

$$\alpha_{min} = \frac{\pi}{2} - \beta_{max} = \frac{\pi}{2} - \tan^{-1}\left(\frac{h_{min}}{d_{max}}\right)$$

Hierin bezeichnet $\alpha_{min}$ den minimalen Bildwinkel, den der optische Sensor 18a in Abhängigkeit des Abstands d und der Höhe h aufweisen sollte. Zudem bezeichnet $\beta_{max}$ den maximalen Winkel zwischen der zweiten gedachten Gerade 34a und dem Gehäuseboden 40a. Die Variable $h_{min}$ bezeichnet die minimale Höhe h. Die Variable $d_{max}$ bezeichnet den maximalen Abstand d zwischen den Sensoren 18a, 24a. Die Variablen $h_{min}$ und $d_{max}$ sind frei wählbar. Weist ein maximaler Abstand $d_{max}$ zwischen den Sensoren 18a, 24a beispielsweise einen Wert von 45 cm und eine minimale Höhe $h_{min}$ beispielsweise einen Wert von 6 cm auf, so ergibt sich für den minimalen Bildwinkel $\alpha_{min}$ ein Wert von im Wesentlichen 82°. Für die angenommenen Werte der Variablen $h_{min}$ und $d_{max}$ weist der optische Sensor 18a einen Bildwinkel α von im Wesentlichen 82° auf. Hierbei wäre der optische Sensor 18a in dem montierten Zustand schräg relativ zu der Haupterstreckungsebene der Haushaltsgeräteplatte 16a ausgebildet.

Sensoren 18a, 24a mit einem Bildwinkel α mit einem Wert kleiner als 82° könnten bei gleichem Wert der Höhe $h_{min}$ einen kleineren Abstand d aufweisen und damit insbesondere enger beieinander angeordnet sein. In einem derartigen Fall wäre der durch die Sensoren 18a, 24a erfasste Detektionsbereich 22a größer. Die Höhe h bezeichnet eine Erstreckung zwischen einem der Sensoren 18a, 24a und einem in der Schwerkraftrichtung den Sensoren 18a, 24a zugewandten Ende eines Detektionsbereichs 22a.

Ein Wellenlängenbereich, für welchen der optische Sensor 18a hauptsächlich ausgelegt ist, ist in Abhängigkeit einer Transmissivität der Haushaltsgeräteplatte 16a gewählt. Im vorliegenden Ausführungsbeispiel ist die Haushaltsgeräteplatte 16a im Wesentlichen aus Glaskeramik ausgebildet. Wie aus dem Stand der Technik bekannt ist, weist das Material Glaskeramik für Infrarot-Strahlung aus einem Wellenlängenbereich von 750 nm bis 2750 nm eine Transmissivität von im Wesentlichen 90 % auf. Der optische Sensor 18a detektiert Infrarot-Strahlung aus einem Wellenlängenbereich von 870 nm bis 930 nm.

Die Haushaltsgerätevorrichtung 10a umfasst mehrere Lichtquellen 20a, die den Detektionsbereich 22a der Sensoren 18a, 24a ausleuchten, um eine präzise Detektion der Bediengeste zu ermöglichen. Im vorliegenden Ausführungsbeispiel weist die Haushaltsgerätevorrichtung 10a beispielsweise vier Lichtquellen 20a auf. In anderen Ausgestaltungen könnte eine andere Anzahl an Lichtquellen vorgesehen sein, wie beispielsweise eine Anzahl von mindestens sechs, insbesondere von mindestens acht und vorteilhaft von mindestens zehn Lichtquellen. Im Folgenden wird lediglich eine der Lichtquellen 20a beschrieben. Die Lichtquelle 20a emittiert Infrarot-Strahlung in einem Wellenlängenbereich von 870 nm bis 930 nm. Eine Emissionsrichtung der Lichtquelle 20a ist im Wesentlichen parallel zu der Schwerkraftrichtung ausgerichtet. Die Lichtquelle 20a ist in dem montierten Zustand zwischen dem optischen Sensor 18a und dem weiteren Sensor 24a angeordnet. In dem montierten Zustand ist die Lichtquelle 20a mittels eines Befestigungselements 42a an dem Gehäuseboden 40a befestigt. Das Befestigungselement 42a sichert in dem montierten Zustand die Lichtquelle 20a in einer Position. In dem montierten Zustand definiert das Befestigungselement 42a einen Abstand der Lichtquelle 20a zu dem optischen Sensor 18a. In dem montierten Zustand definiert das Befestigungselement 42a eine Emissionsrichtung der Lichtquelle 20a.

In dem montierten Zustand definiert das Befestigungselement 42a einen Abstand zwischen den Sensoren 18a, 24a sowie den Lichtquellen 20a. Das Befestigungselement 42a definiert in dem montierten Zustand einen Abstand zwischen den Lichtquellen 20a untereinander.

In einem Verfahren zu einem Betrieb der Haushaltsgerätevorrichtung 10a und damit in dem Betriebszustand wird durch die Sensoreinheit 12a die Bediengeste eines Bedieners detektiert. Auf Basis der durch die Sensoreinheit 12a detektierten Bediengeste wird eine Aktion ausgeführt und/oder eingeleitet, und zwar insbesondere durch die Steuereinheit 14a. Übermittelt ein Bediener mittels der Bediengeste beispielsweise eine Aufforderung zu einer Aktivierung wenigstens eines Heizelements, so steuert die Steuereinheit 14a eine Leistungsversorgung (nicht dargestellt) der Haushaltsgerätevorrichtung 10a an, um die aktivierten Heizelemente mit elektrischem Strom zu versorgen. Die Steuereinheit 14a regelt in einem Heizbetriebszustand eine Energiezufuhr zu den Heizelementen.

Im vorliegenden Ausführungsbeispiel ist die Sensoreinheit 12a zusätzlich zu der Detektion der Bediengeste zu einer Gargeschirrerkennung vorgesehen. Hierzu weist die Sensoreinheit 12a zumindest einen Gargeschirrerkennungs-Sensor (nicht dargestellt) auf, der in der Einbaulage relativ zu einer Ebene, die senkrecht zu der Haupterstreckungsebene der Haushaltsgeräteplatte 16a ausgerichtet ist, schräg ausgerichtet ist. Eine Blickrichtung des Gargeschirrerkennungs-Sensors ist hierbei in den einem Bediener abgewandten Bereich ausgerichtet.

Die Sensoreinheit könnte beispielsweise zwei Gargeschirrerkennungs-Sensoren aufweisen, welche insbesondere beabstandet zueinander angeordnet sein könnten und vorteilhaft gemeinsam dazu vorgesehen sein könnten, die Gargeschirrerkennung stereoskopisch zu detektieren.

In einer weiteren Ausgestaltung ist denkbar, dass der optische Sensor und der weitere Sensor zu der Gargeschirrerkennung vorgesehen sind. Hierbei könnten der optische Sensor und der weitere Sensor beispielsweise ein Gargeschirr und insbesondere eine Bewegung eines Gargeschirrs in dem Detektionsbereich erfassen. Alternativ oder zusätzlich ist denkbar, dass der optische Sensor und der weitere Sensor beweglich angeordnet sind, um die Gargeschirrerkennung durchzuführen. Die Steuereinheit könnte beispielsweise zumindest einen Aktor ansteuern, um den optischen Sensor und/oder den weiteren Sensor zu bewegen, wobei die Steuereinheit vorteilhaft eine Neigung des optischen Sensors und/oder des weiteren Sensors in einer Ebene, die in der Einbaulage im Wesentlichen senkrecht zu der Haupterstreckungsebene der Haushaltsgeräteplatte ausgerichtet ist, verändert, um insbesondere die Gargeschirrerkennung zu ermöglichen.

In einer weiteren Ausgestaltung könnte die Sensoreinheit zumindest einen Sensor, vorteilhaft zumindest einen optischen Sensor, aufweisen, der insbesondere in Form eines SMD-Moduls ausgebildet ist, beispielsweise in der Art eines Mobiltelefons. Dieser zumindest eine Sensor könnte insbesondere in einem Nahbereich der Haushaltsgeräteplatte angeordnet sein, wie beispielsweise analog zu einem Touch-Control.

In einer weiteren Ausgestaltung, bei welcher die Haushaltsgeräteplatte insbesondere eine größere Erstreckung in der x-Richtung aufweist, könnte der zumindest eine optische Sensor insbesondere einen Bildwinkel von weniger als 80° aufweisen, wie beispielsweise einen Winkel von mindestens 30°, insbesondere von mindestens 40° und vorteilhaft von mindestens 60°.

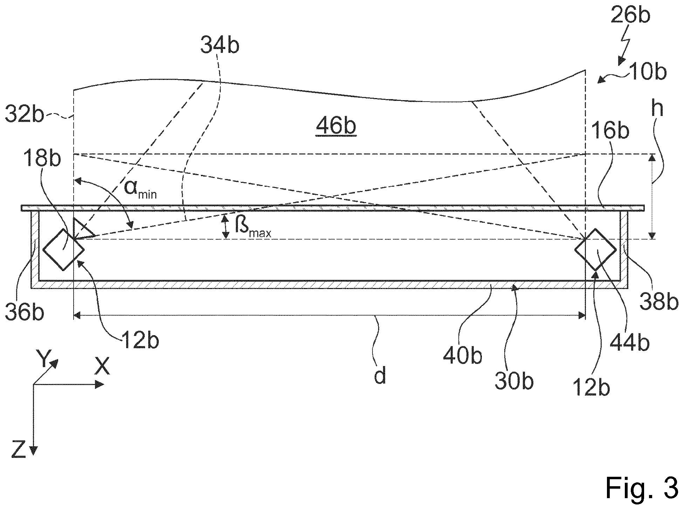

In Fig. 3 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 2 verwiesen werden kann. Zur Unterscheidung der Ausführungsbeispiele ist der Buchstabe a in den Bezugszeichen des Ausführungsbeispiels in den Fig. 1 bis 2 durch den Buchstaben b in den Bezugszeichen des Ausführungsbeispiels der Fig. 3 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 2 verwiesen werden.

Bezugszeichen

| | |
|---|---|
| 10 | Haushaltsgerätevorrichtung |
| 12 | Sensoreinheit |
| 14 | Steuereinheit |
| 16 | Haushaltsgeräteplatte |
| 18 | Optischer Sensor |
| 20 | Lichtquelle |
| 22 | Detektionsbereich |
| 24 | Sensor |
| 26 | Haushaltsgerät |
| 28 | Bedieneinheit |
| 30 | Gehäusebauteil |
| 32 | Erste gedachte Gerade |
| 34 | Zweite gedachte Gerade |
| 36 | Erste Seitenwand |
| 38 | Zweite Seitenwand |
| 40 | Gehäuseboden |
| 42 | Befestigungselement |
| 44 | Strahlungsquelle |
| 46 | Detektionsbereich |

**Patentansprüche**

1. Kochfeldvorrichtung, mit einer Kochfeldplatte (16a) und einer Sensoreinheit (12a), die dazu vorgesehen ist, wenigstens eine Bediengeste eines Bedieners zu detektieren, wobei unter einer Bediengeste eine Bewegung eines Körperteils des Bedieners verstanden werden soll, die der Bediener zu einer Eingabe von Betriebsparametern bewusst und mit einem zumindest weitgehend vordefinierten Bewegungsablauf durchführt, und mit einer Steuereinheit (14a), die dazu vorgesehen ist, auf Basis der durch die Sensoreinheit (12a) detektierten wenigstens einen Bediengeste wenigstens eine Aktion auszuführen und/oder einzuleiten, wobei die Sensoreinheit (12a) zumindest zwei Sensoren (18a, 24a) aufweist, die gemeinsam dazu vorgesehen sind, die wenigstens eine Bediengeste stereoskopisch zu detektieren, und als optische Sensoren (18a, 24a) ausgebildet sind, **dadurch gekennzeichnet, dass** die optischen Sensoren (18a, 24a) dazu vorgesehen sind, Infrarot-Strahlung aus einem Wellenlängenbereich von 850 nm bis 1000 nm zu detektieren, und dass die Sensoreinheit (12a) auf einer einem Bediener abgewandten Seite der Kochfeldplatte (16a) angeordnet ist.

2. Kochfeldvorrichtung nach Anspruch 1, **dadurch gekennzeichnet, dass** die optischen Sensoren (18a, 24a) einen Bildwinkel von mindestens 80° aufweisen.

3. Kochfeldvorrichtung nach einem der vorhergehenden Ansprüche, **gekennzeichnet durch** zumindest eine Lichtquelle (20a), die dazu vorgesehen ist, einen Detektionsbereich der optischen Sensoren (18a, 24a) auszuleuchten, um eine präzise Detektion der wenigstens einen Bediengeste zu ermöglichen.

## Claims

1. Hob device with a hotplate (16a) and a sensor unit (12a), which is provided to detect at least one control gesture of an operator, wherein a control gesture is understood to mean a movement of a body part of the operator, which the operator consciously carries out to input operating parameters and with an at least largely predefined movement sequence, and with a control unit (14a), which is provided to execute and/or introduce at least one action on the basis of the at least one control gesture detected by the sensor unit (12a), wherein the sensor unit (12a) has at least two sensors (18a, 24a), which together are provided to detect the at least one control gesture stereoscopically, and are embodied as visual sensors (18a, 24a), **characterised in that** the visual sensors (18a, 24a) are provided to detect infrared radiation from a wavelength range of 850 nm to 1000 nm, and that the sensor unit (12a) is arranged on a side of the hotplate (16a) facing away from an operator.

2. Hob device according to claim 1, **characterised in that** the visual sensors (18a, 24a) have an angle of view of at least 80°.

3. Hob device according to one of the preceding claims, **characterised by** at least one light source (20a), which is provided to illuminate a detection area of the visual sensors (18a, 24a) in order to enable a precise detection of the at least one control gesture.

## Revendications

1. Dispositif de champ de cuisson, avec une plaque de cuisson (16a) et une unité de capteurs (12a), prévue afin de détecter au moins un geste d'utilisation d'un utilisateur, dans lequel un geste d'utilisation est censé correspondre à un déplacement d'une partie du corps de l'utilisateur, que l'utilisateur effectue sciemment en vue d'une saisie de paramètres d'exploitation et selon un déroulement de déplacement au moins largement prédéfini, et avec une unité de commande (14a), prévue afin d'exécuter et/ou d'entamer, sur la base de l'au moins un geste d'utilisation détectée par l'unité de capteurs (12a), au moins une action, dans lequel l'unité de capteurs (12a) présente au moins deux capteurs (18a, 24a), conjointement prévus afin de détecter de façon stéréoscopique l'au moins un geste d'utilisation, et formés sous la forme de capteurs optiques (18a, 24a), **caractérisé en ce que** les capteurs optiques (18a, 24a) sont prévus afin de détecter un rayonnement infrarouge issu d'une plage de longueurs d'ondes de 850 nm à 1000 nm, et **en ce que** l'unité de capteurs (12a) est disposée sur un côté de la plaque de cuisson (16a) éloigné de l'utilisateur.

2. Dispositif de champ de cuisson selon la revendication 1, **caractérisé en ce que** les capteurs optiques (18a, 24a) présentent un angle de vision d'au moins 80°.

3. Dispositif de champ de cuisson selon l'une des revendications précédentes, **caractérisé par** au moins une source lumineuse (20a) prévue afin d'éclairer une zone de détection des capteurs optiques (18a, 24a), afin de permettre une détection précise de l'au moins un geste d'utilisation.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1505350 A2
- EP 2636954 A2
- DE 102010039371 A1